# EUROPEAN PATENT SPECIFICATION

(11) **EP 2 542 763 B1**
(45) Date of publication and mention of the grant of the patent: **08.04.2020**
(21) Application number: 11704584.9
(22) Date of filing: 09.02.2011
(51) Int. Cl.: F01K 13/02, F01K 23/10, F01K 3/22

(54) **POWER GENERATION ASSEMBLY AND METHOD**
ENERGIEERZEUGUNGSANORDNUNG UND -VERFAHREN
ENSEMBLE DE PRODUCTION D'ÉNERGIE ET PROCÉDÉ ASSOCIÉ

(30) Priority: 02.03.2010 GB 201003436
(43) Date of publication of application: 09.01.2013
(73) Proprietor: Rolls-Royce plc, London N1 9FX (GB)
(72) Inventor: FLETCHER, Paul, Rugby CV23 0LL (GB); GRAHAM, Andrew, Charles, Coventry CV2 5JA (GB); ROBERTSON, Daniel, Derby DE3 9AJ (GB); DONALDSON, Anthony, James, Nottingham NG9 3FS (GB)
(74) Representative: Rolls-Royce plc
(86) International application number: PCT/EP2011/051900
(87) International publication number: WO 2011/107333

(56) References cited:
- DE-A1- 3 331 153
- US-A- 3 832 845
- US-A- 5 148 668
- US-A- 5 175 995
- US-A1- 2004 237 536

## Description

The present disclosure relates to a co-located base load power source and gas turbine cycle with a heat recovery steam generator and particularly but not exclusively relates to a method of and apparatus for starting a wet gas turbine cycle.

### Background

Power plants for the generation of power (e.g. motive or electrical) may for example include nuclear, coal or gas powered plants. Nuclear power plants typically comprise a nuclear generator, which may heat a steam cycle, for example, via a intermediary working fluid. The steam cycle may in turn power a steam turbine. A nuclear power plant typically has very little load following capability, and may therefore operate at a base load. Base load electricity from nuclear plants typically command the lowest selling price. By contrast, gas fired power plants, which typically use gas turbines, may have a better load following capability.

There are many types of gas turbine, for example, simple cycle and advanced cycle gas turbines. A simple cycle gas turbine is able to respond rapidly to load changes, including rapid start up. The rapid response is particularly true for aero-derivatives and 10 minutes is an industry standard rapid start time for engines in the 40-100 MW class. However, simple cycle gas turbine plants have relatively low thermal efficiencies, typically up to around 42-44%.

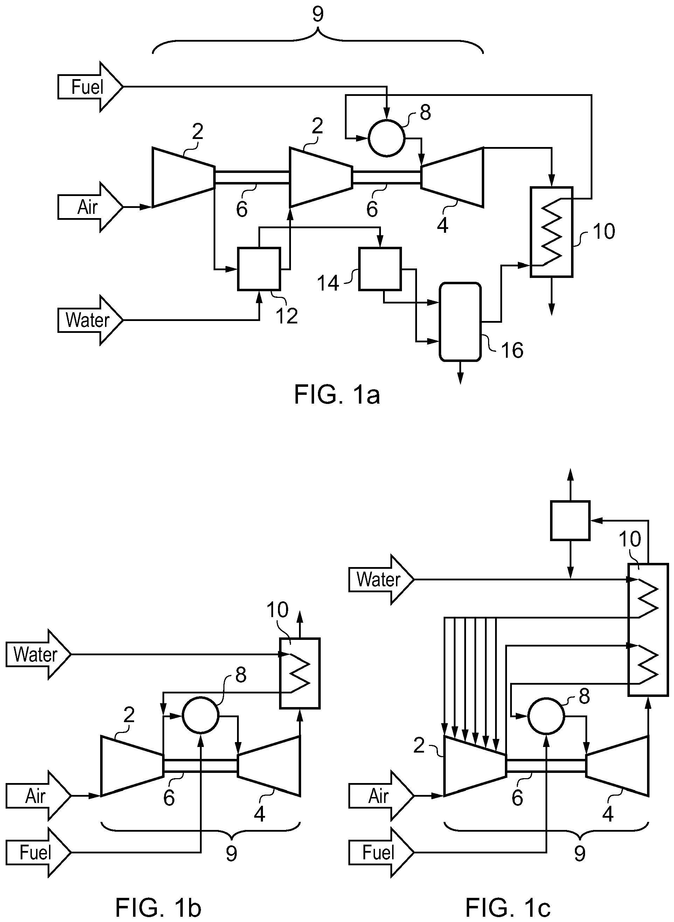

In this respect, a combined cycle gas turbine power plant, with a separate steam turbine powered by steam generated in a gas turbine exhaust heat exchanger, may provide a higher thermal efficiency, e.g. up to 60%. Other advanced gas turbine cycles involving water, e.g. with steam injection into the gas turbine engine rather than a steam turbine, may also provide higher thermal efficiencies. Examples of such advanced gas turbine cycles are shown in Figure 1, e.g., a Humid Air Turbine (HAT) cycle (Fig 1a); a Steam Injected Gas turbine (STIG) cycle (Fig 1b); and a Top Humid Air Turbine (TOPHAT) cycle (Fig 1c). Each of the advanced cycles depicted comprises one or more compressors 2, one or more turbines 4, one or more shafts 6 therebetween and a combustion chamber 8, together making up a gas turbine 9, and an exhaust heat exchanger or heat recovery steam generator 10. The HAT cycle additionally comprises an intercooler 12, an aftercooler 14 and a saturator 16. In each case, water is added to the gas turbine cycle. The main function of the water in the gas turbine cycles is to recover exhaust heat, thereby giving greatly increased fuel efficiency. For example, the thermal efficiency of a steam injected gas turbine (e.g. 54%) may be approximately 30% greater than the thermal efficiency of a simple cycle gas turbine (e.g. 42%). The water may provide many other beneficial effects, in particular increased power output and density and reduced emissions.

The water may be injected at points other than those shown in Figure 1, for example directly into the combustion chamber 8, at entry into the turbine 4, or during the expansion in the turbine, e.g. by injection into the turbine blade cooling paths. Furthermore, the water may be in liquid form, e.g. liquid droplets, or in gaseous form, e.g. steam or vapour.

Such advanced gas turbine cycles do not typically have a rapid start up time. For example, boilers, heat exchangers and steam turbines (in the case of a combined cycle), may suffer high transient thermal stresses. Heat Recovery Steam Generators (HRSG) require typically 15 to 45 minutes to reach full output with steam output ramping up as the HRSG attains full temperature. There is currently no way to achieve a 10 minute start for gas turbine cycles involving steam. Boiler, e.g. HRSG, start times are too long, and other ways of producing steam are very limited. In addition, the gas turbine design capacity must be increased to accept large steam flows, which means its performance is compromised during start when steam is not yet available. It is therefore difficult to combine the rapid start of a simple cycle gas turbine with the higher efficiencies of the advanced gas cycles.

US 5148668 describes a gas/steam power station plant (combined plant) having a gas turbine group, a steam circuit and a waste heat boiler. These parts are individually or in combination with one another connected, directly or indirectly, to a steam accumulator. This connection is one in which a proportion of steam from the constantly charged-up steam accumulator is available for an autonomous start-up of at least one steam turbine, coupled to the gas turbine group, of the steam circuit, whereby the start capability of the combined plant can be increased.

US2004/0237536 describes a power generation plant having at least one gas turbine cycle with heat-recovery boiler and at least one steam turbine cycle operated via the heat-recovery boiler. The gas turbine cycle is designed to be semi-closed and essentially free of emissions and essentially comprising a compressor, a combustion chamber arranged downstream of the compressor, a gas turbine arranged downstream of the combustion chamber, a heat-recovery boiler arranged downstream of the gas turbine, and at least one generator coupled to the gas turbine. Modes of operation with the gas turbine cycle stopped and start-up using fresh air are made possible by injecting heat using a burner and a blower which allow hot gas to be fed into the hot-gas path between gas turbine and heat-recovery boiler. The hot gas heats the boiler and allows power to be generated which is used to start the gas turbine.

The present invention seeks to address these issues.

### Statements of Invention

According to a first aspect of the present invention there is provided a method of starting a gas turbine cycle comprising a gas turbine and a heat recovery steam generator or exhaust gas heat exchanger, the method comprising: heating water in a steam cycle with a base load heat source; powering one or more steam turbines with steam from said steam cycle; and diverting a portion of the steam from the steam cycle to the gas turbine cycle, so that the gas turbine reaches a rated power output more rapidly than without the diversion of the portion of the steam from the steam cycle.

Steam may be diverted to upstream and/or downstream of a heat recovery steam generator steam flow path. Diversion of the portion of the steam from the steam cycle may be stopped, for example once the gas turbine has reached the rated power output. The portion of the steam from the steam cycle may be diverted at the lowest pressure compatible with the gas turbine. Components of the gas turbine cycle may be preheated with the portion of the steam diverted from the steam cycle.

A first reservoir may be provided in the steam cycle. The first reservoir may be arranged to smooth out variations in the flow in the steam cycle. The first reservoir may be arranged in series in the steam cycle, for example between first and second pumps provided in the steam cycle. Water may be returned from the gas turbine to the first reservoir. Liquid water may be stored in the first reservoir.

A second reservoir may also be provided. The second reservoir may be arranged to store the portion of the steam from the steam cycle for diversion to the gas turbine. The second reservoir may be arranged upstream of one or more of the steam turbines. The second reservoir may be arranged in series with the steam cycle. The second reservoir may be between the base load heat source and one or more of the steam turbines. Alternatively, the second reservoir may be arranged in a branch of the steam cycle parallel with the steam turbine.

The base load heat source may comprise one or more of a nuclear power plant, a coal fired power plant, an oil fired power plant, a hydrogen fired power plant or any other base load heat source. The base load heat source is operated at substantially full power output during diversion of the portion of the steam from the steam cycle. The gas turbine cycle may comprise a HAT, STIG, TOPHAT, combined cycle or any other water injected cycle. An electrical grid connection may be shared between a first generator connected to the steam turbines and a second generator connected to the gas turbine. Hydrogen may be burned in a combustion chamber of the gas turbine.

### Brief Description of the Drawings

For a better understanding of the present invention, and to show more clearly how it may be carried into effect, reference will now be made, by way of example, to the accompanying drawings, in which:-
Figure 1 shows examples of various types of water injected gas turbine cycles, in particular a Humid Air Turbine (HAT) cycle (Fig 1a); a Steam Injected Gas turbine (STIG) cycle (Fig 1b); and a Top Humid Air Turbine (TOPHAT) cycle (Fig 1c);
Figure 2 shows a nuclear power plant steam cycle according to an example of the present disclosure;
Figure 3 shows a nuclear power plant steam cycle according to a further example of the present disclosure; and
Figure 4 shows a grid connection according to an example of the present disclosure.

### Detailed Description

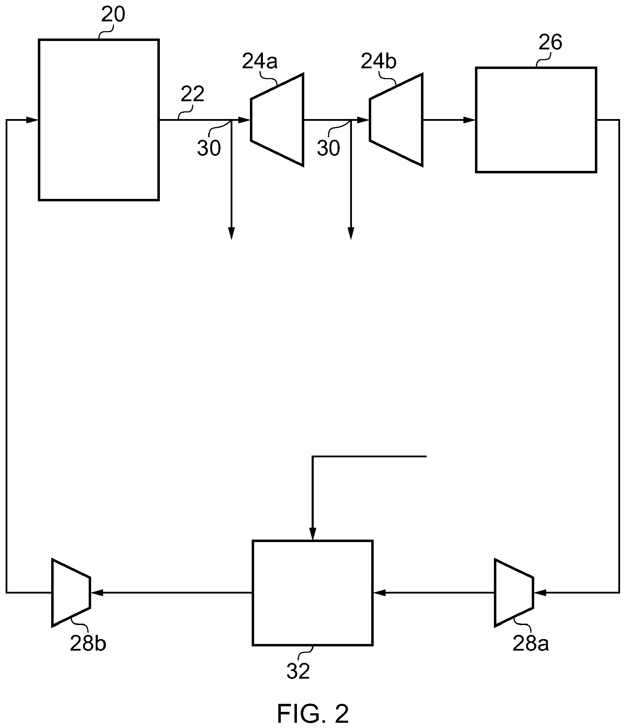

With reference to Figures 1 and 2, a power generation assembly is connectable to a base load heat source 20 arranged to heat water in a steam cycle 22. The base load heat source may comprise one or more of a nuclear power plant, a coal fired power plant, an oil fired power plant, a hydrogen fired power plant, a geothermal heat source, a solar heat source or any other base load heat source. The base load heat source may have a substantially constant power output and may not be suited to following a varying load. In particular, a base load power plant, for example a nuclear power plant, may provide a high power output, but may not be suited to following a changing load. Accordingly, such power plants may be used to provide a "base load", for example to an electrical grid, whilst other power sources, which can vary their output more rapidly, may be used to follow the varying load. This power generation assembly may generate motive and/or electrical power, for example in land based electrical power generation and/or marine propulsion applications.

The power generation assembly may comprise a gas turbine cycle comprising a gas turbine 9 and a heat recovery steam generator 10. The gas turbine 9 may comprise one or more compressors 2, one or more turbines 4, one or more shafts 6 therebetween and a combustion chamber 8. The gas turbine 9 may further comprise a conventional low cost start system (not shown), e.g. an electric starter motor. The heat recovery steam generator 10 may generate steam from the heat of the gas turbine exhaust and the steam generated may be used to power a steam turbine (e.g. a combined cycle) or be injected into the gas turbine compressors 2, combustion chamber 8, turbines 4 and/or at any point therebetween. For example, steam raised in the heat recovery steam generator 10 may be injected into the combustion chamber 8 and/or high pressure cooling system upstream of the turbines 4. The gas turbine cycle may for example comprise a HAT, STIG, TOPHAT, combined cycle or any other cycle with liquid, e.g. water, and gaseous, e.g. air, components. In particular, the power generation assembly may relate to the co-location of a steam injected gas turbine, e.g. STIG, with a nuclear plant.

The steam cycle 22 may comprise one or more steam turbines 24a, 24b, a condenser 26 and one or more pumps 28a, 28b. The steam turbines 24a, 24b, condenser 26 and pumps 28a, 28b may be arranged in a conventional manner and with piping between the components. The steam cycle may further comprise a first reservoir 32, e.g. an oversized hot well. The first reservoir 32 may be arranged to smooth out variations in the flow in the steam cycle, for example by acting as a buffer. The first reservoir 32 may be arranged in series in the steam cycle 22, for example between pumps 28a, 28b provided in the steam cycle 22. Water may be returned from the gas turbine 9 to the first reservoir 32. Liquid water may be stored in the first reservoir 32.

The power generation assembly may further comprise diverting apparatus 30. The diverting apparatus 30 may comprise one or more valves. In particular, the diverting apparatus may comprise large nuclear quality stop and/or non-return valves to isolate the gas turbine 9 from the steam cycle 22 when the gas turbine is not in use. The diverting apparatus 30 may be configured to selectively divert a portion of steam from the steam cycle 22 to the gas turbine 9 on start up of the gas turbine, so that the gas turbine reaches a rated power output more rapidly than without the diversion of the portion of the steam from the steam cycle.

The portion of the steam diverted from the steam cycle 22 may be diverted to the heat recovery steam generator 10 in order to warm up the heat recovery steam generator. Alternatively, or additionally, the steam diverted from the steam cycle 22 may be injected into the gas turbine compressors 2, combustion chamber 8, turbines 4 and/or at any point therebetween. For example, the diverted steam may be injected into the steam side of the gas turbine cycle upstream and/or downstream of the heat recovery steam generator 10. Water from the gas turbine exhaust may be condensed out and returned to the steam cycle 22. Water collected in this way may be returned to the first reservoir 32. The diverted steam may also be used to preheat other components of the gas turbine 9, for example the compressor, combustor or turbine casings. Such preheating may also reduce overall start time and/or increase equipment life.

Accordingly, the gas turbine cycle comprising a gas turbine 9 and a heat recovery steam generator 10, may be started by: heating water in the steam cycle 22 with the base load heat source 20; powering one or more steam turbines 26 with steam from said steam cycle 22; and diverting a portion of the steam from the steam cycle 22 to the gas turbine 9, so that the gas turbine reaches a rated power output more rapidly than without the diversion of the portion of the steam from the steam cycle 22.

The gas turbine 9 may be started while the base load plant 20 is at full output. Initially steam may be taken from a bleed in the steam turbine 24a, 24b. The steam turbine's power output may therefore be reduced, but this reduction may be offset at least as much by the additional power generated by the gas turbine 9. By taking stored water from the first reservoir 32 the steam cycle 22 and hence base load heat source 20 may see little change in its steam inlet or outlet conditions during the time taken for the gas turbine heat recovery steam generator 10 to reach full output. The gas turbine power output can thus be added to the base load plant power output very quickly without compromising the base load plant steam operation.

The portion of the steam from the steam cycle 22 may be diverted at the lowest pressure from the steam cycle 22 compatible with the gas turbine 9. The pressure of the portion of steam diverted to the gas turbine may be higher than the gas turbine compressor 2 delivery pressure. The diverted steam may be at a pressure of 50 bar (50×10⁵Pa) or more and at a temperature of approximately 450°C. The diverted flow of steam may be at a flow rate of approximately 20 kg/s. Such a flow rate may be required within minutes of starting the gas turbine 9. Flow of the diverted steam may be reduced after approximately 10 minutes and may be stopped within approximately 45 minutes.

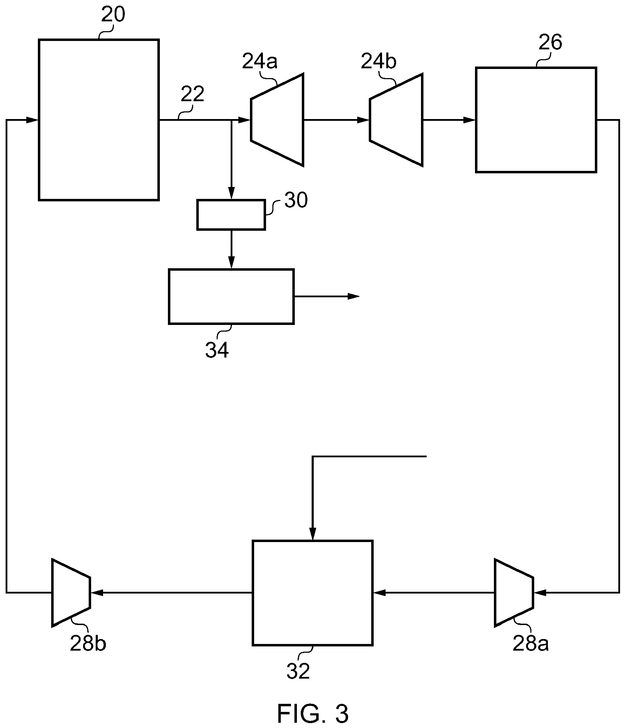

With reference to Figure 3, the steam cycle 22 may comprise a second reservoir 34, e.g. a pressure vessel. The second reservoir 34 may comprise a high temperature pressure vessel, which may be suitable for storing steam. The second reservoir 34 may be arranged to store the portion of the steam from the steam cycle 22 for diversion to the gas turbine 9. The second reservoir 34 may be sized to store sufficient steam for diversion to the gas turbine 9 such that the steam flow in the steam cycle 22 may be substantially uninterrupted during diversion. The second reservoir 34 may be arranged upstream of one or more of the one or more steam turbines 24a, 24b. The second reservoir 34 may be located between the base load heat source 20 and one or more of the steam turbines. The second reservoir 34 may be arranged in a parallel branch of the steam cycle 22, which may be parallel to one or more of the steam turbines 24a, 24b. Alternatively, the second reservoir 34 may be arranged in series with the steam cycle 22. The second reservoir 34 may permit a small steam off-take flow from the steam cycle to be stored such that when a sufficient mass of high pressure steam is available, the gas turbine 9 may be started on demand. As a result, the feed from steam cycle may be smaller and isolated during off-take. This may simplify steam off-take control and isolation issues, which may for example be a factor in the case of a nuclear power plant.

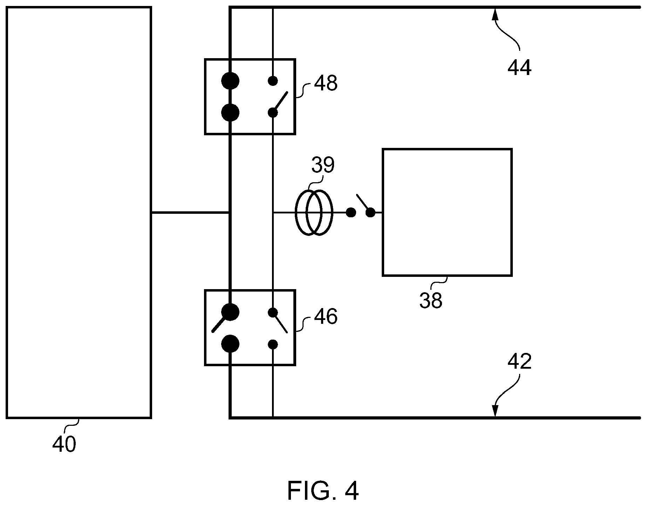

With reference to Figure 4, the power generation assembly may further comprise a gas turbine generator 38 connected to the gas turbine 9. The generator 38 may share an electrical grid system with a steam turbine generator 40 powered by the base load heat source 20 and steam turbines 24a, 24b. The generator 38 may connect to the grid connection via a transformer 39. The electrical grid system may comprise first and second grid connections 42, 44. The electrical grid system may further comprise first and second circuit breakers 46, 48, which may each in turn comprise a pair of breakers arranged to connect either generator 38, 40 to either grid connection 42, 44. Figure 4 shows the breakers 46, 48 in a maintenance position with the gas turbine generator 38 disconnected from both electrical grid connections 42, 44.

Power generation plant types are typically located separately and have their own electrical grid connections and other infrastructure. However, the grid connections and other infrastructure all require considerable investment. This is particularly true for nuclear power plants because for safety reasons many important features, including electricity supply, have to be duplicated to provide redundant backup. In the arrangement shown in Figure 4, a nuclear generator 40 may be given priority over the gas turbine generator 38, for example the gas turbine breakers may open if the nuclear breakers are closed. The gas turbine generator 38 may use the off-line redundant grid connection 42, 44, because the gas turbine 9 can tolerate being tripped if required. The gas turbine 9 may be used to provide grid support especially during peak load periods or supply reductions associated with increased use of renewables (e.g. wind power).

Advantageously, this arrangement allows a rapid gas turbine start up using steam from the base load power plant, e.g. nuclear plant, to feed the gas turbine engine and/or to safely warm the boiler. The arrangement permits the use of a high efficiency advanced gas turbine cycle in a load following configuration. A cost saving by sharing of features such as the redundant grid connection may also be achieved. Furthermore, a power plant with a more flexible power output may result. A higher price for any electricity sold, compared to a base load power plant, may thus be achieved. The gas turbine may also provide site backup power, avoiding the cost of additional generating capacity (backup diesels or gas turbines).

The present arrangement may provide a power generation arrangement with high power density (and hence cost effectiveness) and high fuel efficiency, which also may be dispatched within 10 minutes. Such an arrangement may be useful for both emergency grid and base load generation.

The plant could be used to produce energy from stored Hydrogen. This has significantly different combustion characteristics than natural gas, and a further synergy would be the very beneficial use of steam in the gas turbine combustion process, for example by reducing the high combustion temperature of Hydrogen. The Hydrogen could be derived from nuclear power, or exported from another plant, for example electrolysis cells for the creation of sodium hydroxide.

## Claims

1. A method of starting a gas turbine cycle comprising a gas turbine (9) and a heat recovery steam generator (10), the method comprising:
heating water in a steam cycle (22) with a base load heat source (20);
operating the base load heat source at substantially full power output;
powering one or more steam turbines (24a, 24b) with steam from said steam cycle; and
diverting a portion of the steam from the steam cycle to the gas turbine cycle, so that the gas turbine reaches a rated power output more rapidly than without the diversion of the portion of the steam from the steam cycle.

2. The method of starting a gas turbine cycle as claimed in claim 1, the method further comprising:
diverting steam to one or more of upstream and downstream of a steam flow path within the heat recovery steam generator.

3. The method of starting a gas turbine cycle as claimed in any preceding claim, the method further comprising:
sharing an electrical grid connection between a first generator connected to the steam turbines and a second generator (38) connected to the gas turbine.

4. The method of starting a gas turbine cycle as claimed in any preceding claim, the method further comprising:
providing a first reservoir (32) in the steam cycle, the first reservoir being arranged to smooth out variations in the flow in the steam cycle.

5. The method of starting a gas turbine cycle as claimed in claim 4, the method further comprising:
arranging the first reservoir in series between first and second pumps (28a,b) provided in the steam cycle.

6. The method of starting a gas turbine cycle as claimed in claim 4 or 5, the method further comprising:
returning water from the gas turbine to the first reservoir.

7. The method of starting a gas turbine cycle as claimed in any of claims 4 to 6, the method further comprising:
providing a second reservoir (34), the second reservoir being arranged to store the portion of the steam from the steam cycle for diversion to the gas turbine.

8. The method of starting a gas turbine cycle as claimed in claim 7, the method further comprising:
arranging the second reservoir upstream of one or more of the steam turbines.

9. The method of starting a gas turbine cycle as claimed in claim 7 or 8, the method further comprising:
arranging the second reservoir in series with the steam cycle between the base load heat source and one or more of the steam turbines.

10. The method of starting a gas turbine cycle as claimed in claim 7 or 8, the method further comprising:
arranging the second reservoir in a branch of the steam cycle parallel with the steam turbine.

11. The method of starting a gas turbine cycle as claimed in any preceding claim, the method further comprising:
diverting the portion of the steam from the steam cycle at the lowest pressure compatible with the gas turbine.

12. The method of starting a gas turbine cycle as claimed in any preceding claim, the method further comprising:
preheating components of the gas turbine cycle with the portion of the steam diverted from the steam cycle.

13. The method of starting a gas turbine cycle as claimed in any preceding claim, wherein the base load heat source comprises one or more of a nuclear power plant, a coal fired power plant, an oil fired power plant, a hydrogen fired power plant or any other base load heat source.

14. The method of starting a gas turbine cycle as claimed in any preceding claim, wherein the gas turbine cycle comprises a HAT, STIG, TOPHAT, combined cycle or any other water injected cycle.

15. The method of starting a gas turbine cycle as claimed in any preceding claim, the method further comprising:
burning Hydrogen in a combustion chamber of the gas turbine.

## Patentansprüche

1. Verfahren zum Starten eines Gasturbinenzyklus, umfassend eine Gasturbine (9) und einen Wärmerückgewinnungs-Dampfgenerator (10), wobei das Verfahren umfasst:
ein Wärmen von Wasser in einem Dampfzyklus (22) mit einer Basislastwärmequelle (20);
ein Betreiben der Basislastwärmequelle bei im Wesentlichen voller Ausgangsleistung;
ein Versorgen einer oder mehrerer Dampfturbinen (24a, 24b) mit Dampf vom Dampfzyklus; und
ein Ableiten eines Teils des Dampfs vom Dampfzyklus zum Gasturbinenzyklus, so dass die Gasturbine eine Nennausgangsleistung schneller erreicht als ohne die Ableitung des Teils des Dampfs vom Dampfzyklus.

2. Verfahren zum Starten eines Gasturbinenzyklus nach Anspruch 1, wobei das Verfahren ferner umfasst:
ein Ableiten von Dampf stromaufwärts und/oder stromabwärts eines Dampfströmungswegs im Wärmerückgewinnungs-Dampfgenerator.

3. Verfahren zum Starten eines Gasturbinenzyklus nach einem der vorangehenden Ansprüche, wobei das Verfahren ferner umfasst:
ein Teilen einer Stromnetzverbindung zwischen einem mit den Dampfturbinen verbundenen ersten Generator und einem mit der Gasturbine verbundenen zweiten Generator (38).

4. Verfahren zum Starten eines Gasturbinenzyklus nach einem der vorangehenden Ansprüche, wobei das Verfahren ferner umfasst:
ein Bereitstellen eines ersten Behälters (32) im Dampfzyklus, wobei der erste Behälter angeordnet ist, um Variationen im Strom im Dampfzyklus zu glätten.

5. Verfahren zum Starten eines Gasturbinenzyklus nach Anspruch 4, wobei das Verfahren ferner umfasst:
ein Anordnen des ersten Behälters in Reihe zwischen im Dampfzyklus bereitgestellten ersten und zweiten Pumpen (28a, b).

6. Verfahren zum Starten eines Gasturbinenzyklus nach Anspruch 4 oder 5, wobei das Verfahren ferner umfasst:
ein Rückführen von Wasser von der Gasturbine zum ersten Behälter.

7. Verfahren zum Starten eines Gasturbinenzyklus nach einem der Ansprüche 4 bis 6, wobei das Verfahren ferner umfasst:
ein Bereitstellen eines zweiten Behälters (34), wobei der zweite Behälter angeordnet ist, um einen Teil des Dampfs vom Dampfzyklus zur Ableitung zur Gasturbine zu speichern.

8. Verfahren zum Starten eines Gasturbinenzyklus nach Anspruch 7, wobei das Verfahren ferner umfasst:
ein Anordnen des zweiten Behälters stromaufwärts einer oder mehrerer der Dampfturbinen.

9. Verfahren zum Starten eines Gasturbinenzyklus nach Anspruch 7 oder 8, wobei das Verfahren ferner umfasst:
ein Anordnen des zweiten Behälters in Reihe mit dem Dampfzyklus zwischen der Basislastwärmequelle und einer oder mehreren der Dampfturbinen.

10. Verfahren zum Starten eines Gasturbinenzyklus nach Anspruch 7 oder 8, wobei das Verfahren ferner umfasst:
ein Anordnen des zweiten Behälters in einem Zweig des Dampfzyklus parallel zur Dampfturbine.

11. Verfahren zum Starten eines Gasturbinenzyklus nach einem der vorangehenden Ansprüche, wobei das Verfahren ferner umfasst:
ein Ableiten des Teils des Dampfs vom Dampfzyklus auf dem niedrigsten Druck, der mit der Gasturbine kompatibel ist.

12. Verfahren zum Starten eines Gasturbinenzyklus nach einem der vorangehenden Ansprüche, wobei das Verfahren ferner umfasst:
ein Vorwärmen von Komponenten des Gasturbinenzyklus mit dem vom Dampfzyklus abgeleiteten Teil des Dampfs.

13. Verfahren zum Starten eines Gasturbinenzyklus nach einem der vorangehenden Ansprüche, wobei die Basislastwärmequelle eines oder mehrere eines Kernkraftwerks, eines kohlebetriebenen Kraftwerks, eines ölbetriebenen Kraftwerks, eines wasserstoffbetriebenen Kraftwerks oder jeder anderen Basislastwärmequelle umfasst.

14. Verfahren zum Starten eines Gasturbinenzyklus nach einem der vorangehenden Ansprüche, wobei der Gasturbinenzyklus einen HAT, STIG, TOPHAT, kombinierten Zyklus oder jeden Zyklus mit Wassereinspritzung umfasst.

15. Verfahren zum Starten eines Gasturbinenzyklus nach einem der vorangehenden Ansprüche, wobei das Verfahren ferner umfasst:
ein Verbrennen von Wasserstoff in einer Verbrennungskammer der Gasturbine.

## Revendications

1. Procédé de démarrage d'un cycle de turbine à gaz comprenant une turbine à gaz (9) et un générateur de vapeur à récupération de chaleur (10), le procédé comprenant :
le chauffage d'eau dans un cycle de vapeur (22) avec une source de chaleur de charge de base (20) ;
le fonctionnement de la source de chaleur de charge de base au niveau d'une sortie à sensiblement pleine puissance ;
l'alimentation d'une ou de plusieurs turbines à vapeur (24a, 24b) avec la vapeur provenant dudit cycle de vapeur ; et
le détournement d'une partie de la vapeur depuis le cycle de vapeur vers le cycle de turbine à gaz, afin que la turbine à gaz atteigne une sortie de puissance nominale plus rapidement que sans le détournement de la partie de la vapeur provenant du cycle de vapeur.

2. Procédé de démarrage d'un cycle de turbine à gaz selon la revendication 1, le procédé comprenant en outre :
le détournement de vapeur vers un ou plusieurs de l'amont et de l'aval d'un trajet d'écoulement de vapeur dans le générateur de vapeur à récupération de chaleur.

3. Procédé de démarrage d'un cycle de turbine à gaz selon l'une quelconque des revendications précédentes, le procédé comprenant en outre :
le partage d'un raccord de réseau électrique entre un premier générateur raccordé aux turbines à vapeur et un second générateur (38) raccordé à la turbine à gaz.

4. Procédé de démarrage d'un cycle de turbine à gaz selon l'une quelconque des revendications précédentes, le procédé comprenant en outre :
la fourniture d'une premier réservoir (32) dans le cycle de vapeur, le premier réservoir étant agencé pour atténuer les variations dans l'écoulement dans le cycle de vapeur.

5. Procédé de démarrage d'un cycle de turbine à gaz selon la revendication 4, le procédé comprenant en outre :
l'agencement du premier réservoir en série entre des première et seconde pompes (28a,b) disposées dans le cycle de vapeur.

6. Procédé de démarrage d'un cycle de turbine à gaz selon la revendication 4 ou 5, le procédé comprenant en outre :
le renvoi de l'eau depuis la turbine à gaz vers le premier réservoir.

7. Procédé de démarrage d'un cycle de turbine à gaz selon l'une quelconque des revendications 4 à 6, le procédé comprenant en outre :
la fourniture d'un second réservoir (34), le second réservoir étant agencé pour stocker la partie de la vapeur provenant du cycle de vapeur en vue du détournement vers la turbine à gaz.

8. Procédé de démarrage d'un cycle de turbine à gaz selon la revendication 7, le procédé comprenant en outre :
l'agencement du second réservoir en amont de l'une ou plusieurs des turbines à vapeur.

9. Procédé de démarrage d'un cycle de turbine à gaz selon la revendication 7 ou 8, le procédé comprenant en outre :
l'agencement du second réservoir en série avec le cycle de vapeur entre la source de chaleur de charge de base et l'une ou plusieurs des turbines à vapeur.

10. Procédé de démarrage d'un cycle de turbine à gaz selon la revendication 7 ou 8, le procédé comprenant en outre :
l'agencement du second réservoir dans une branche du cycle de vapeur parallèle à la turbine à vapeur.

11. Procédé de démarrage d'un cycle de turbine à gaz selon l'une quelconque des revendications précédentes, le procédé comprenant en outre :
le détournement de la partie de la vapeur depuis le cycle vapeur à la pression la plus basse compatible avec la turbine à gaz.

12. Procédé de démarrage d'un cycle de turbine à gaz selon l'une quelconque des revendications précédentes, le procédé comprenant en outre :
le préchauffage des composants du cycle de turbine à gaz avec la partie de la vapeur détournée du cycle de vapeur.

13. Procédé de démarrage d'un cycle de turbine à gaz selon l'une quelconque des revendications précédentes, ladite source de chaleur de charge de base comprenant l'un ou plusieurs d'une centrale électrique nucléaire, d'une centrale électrique à charbon, d'une centrale électrique à mazout, d'une centrale électrique à hydrogène ou tout autre source de chaleur de charge de base.

14. Procédé de démarrage d'un cycle de turbine à gaz selon l'une quelconque des revendications précédentes, ledit cycle de turbine à gaz comprenant un cycle de turbine à air humide (HAT), un cycle de turbine à gaz à injection de vapeur (STIG), un cycle TOPHAT, un cycle combiné ou tout autre cycle à injection d'eau.

15. Procédé de démarrage d'un cycle de turbine à gaz selon l'une quelconque des revendications précédentes, le procédé comprenant en outre :
la combustion d'hydrogène dans une chambre de combustion de la turbine à gaz.
